# DEMANDE DE BREVET EUROPEEN

(11) **EP 0 876 080 A1**
(43) Date de publication de la demande: **04.11.1998**
(21) Numéro de dépôt: 98401061.1
(22) Date de dépôt: 30.04.1998
(51) Int. Cl.: H05B 3/14

(54) **Dispositif de chauffage à éléments résistifs à coefficient de température positif**

(30) Priorité: 02.05.1997 FR 9705463
(71) Demandeur: Réalisations et Diffusion pour l'Industrie (R.D.I), 93420 Villepinte (FR)
(72) Inventeur: Dorschky, Jürgen, 77720 Saint Mery (FR); Millet, Christian, 77230 Rouvres (FR)
(74) Mandataire: Rinuy, Santarelli

(57) **Abrégé**

L'invention concerne un dispositif de chauffage comportant un boîtier (10) à parois ajourées (11, 12) pour le passage d'air à travers le boîtier, dans lequel sont montés au moins un élément résistif plan (17), ayant un coefficient de température positif CTP, et au moins une lame (18) adaptée à former radiateur thermique pour ledit au moins un élément résistif plan lorsque ce dernier est alimenté en énergie électrique, ladite au moins une lame étant en contact de transfert thermique avec ledit au moins un élément résistif plan, et dans lequel ladite au moins une lame est adaptée à former ressort de mise sous pression dudit au moins un élément résistif plan pour le maintenir en position dans le boîtier. Avantageusement ladite au moins une lame est en outre adaptée à former conducteur électrique pour l'alimentation en énergie électrique dudit au moins un élément résistif plan.

Application : chauffage de véhicule automobile.

## Description

La présente invention a trait à un dispositif de chauffage à base d'éléments résistifs à coefficient de température positif (CTP).

Il est en particulier, mais non exclusivement, destiné à équiper les voitures automobiles d'une source de chaleur instantanée qui permet d'élever plus rapidement la température de l'habitacle. A ce titre, il est principalement dédié aux véhicules équipés de moteurs "basses calories" tels que les moteurs électriques et les moteurs TDI (turbo-diesel à injection directe), dans lesquels il servira de chauffage principal ou de chauffage d'appoint.

Pour une telle application de chauffage, de nombreux moyens et dispositifs ont déjà été proposés et mis en oeuvre, et en particulier :
- un brûleur additionnel de combustible, tel que de l'essence, qui s'avère notamment coûteux et polluant,
- un thermo-plongeur réchauffant l'eau du circuit de refroidissement du moteur, dont les principaux inconvénients sont l'inertie et les pertes thermiques inhérentes à un tel système, ou encore
- un chauffage électrique d'air, branché sur le circuit électrique du véhicule, qui nécessite généralement l'utilisation d'un système de protection en température et qui surchauffe l'air, rendant peu agréable à l'utilisateur cette source de chaleur d'appoint.

Pour pallier ces inconvénients, on s'est tourné vers la mise en oeuvre de dispositifs de chauffage à base d'éléments résistifs à coefficient de température positif ou élément CTP.

Avant de décrire un tel dispositif, on rappellera que les éléments CTP sont des éléments dont la résistivité croît brusquement avec la température dans une plage de températures relativement faible. Ces éléments CTP se sont montrés particulièrement utiles comme composants pour des dispositifs de chauffage à autorégulation. En effet, au contraire d'une résistance classique qui doit être couplée à un thermostat dans le cadre d'un dispositif de chauffage et dont la température baisse fortement lorsque placée dans un flux d'air, alors que la puissance reste sensiblement stable, la puissance d'un élément CTP augmente et sa température reste sensiblement stable, lorsque placé dans un flux d'air ayant tendance à le refroidir.

Autrement dit, lorsque de l'air est chauffé par ce type de dispositif de chauffage à éléments CTP, à chaque augmentation de la quantité d'air exposée au dispositif, plus de chaleur est transférée à l'air, entraînant une baisse de la température du dispositif. Cependant, la baisse de température entraîne une réduction de la résistance des éléments CTP, et par voie de conséquence, une augmentation du courant électrique y circulant. Par conséquent, la température du dispositif de chauffage remonte à sa valeur d'origine et le dispositif devient stable. Ainsi, lorsque de l'air est chauffé par un tel dispositif de chauffage à éléments CTP, la puissance augmente avec l'augmentation de la quantité d'air passant par le dispositif.

Les matériaux CTP qui ont été utilisés dans ces dispositifs de chauffage sont généralement en céramique, tels que des titanates de baryum dopés, ou en "polymère conducteur", tel qu'un polymère cristallin dans lequel est dispersé du noir de carbone.

On notera encore, que pour chauffer avec efficacité l'habitacle d'une voiture, le chauffage doit dissiper une puissance d'environ 1000 W avec un flux d'air de 300 à 350 kg/h sans avoir une perte de charge importante (chute de pression entre le flux entrant dans le système de chauffage et le flux sortant de celui-ci qui, en pratique, doit être inférieure à 80 Pa) dans le conduit d'aération. Bien entendu, un tel chauffage doit évidemment être le moins cher possible.

Les systèmes de chauffage à base d'éléments CTP proposés pour l'automobile ont été souvent transposés du domaine domestique. Ils donnent généralement satisfaction hors du domaine automobile, sans toutefois donner pleinement satisfaction lorsque transposés au domaine automobile.

En particulier, il a été proposé d'utiliser des structures en nid d'abeilles à base de céramiques CTP, pourvues de moyens de connexion à une alimentation. Lorsque placées juste après le ventilateur de la voiture, dans le conduit d'aération, celles-ci entraînent des pertes de charges importantes. L'utilisation d'un ventilateur plus puissant pour remédier à cet inconvénient conduirait à des surcoûts non négligeables et serait générateur de bruit supplémentaire. Par ailleurs, une structure en nid d'abeilles présentant des passages d'air plus grands, afin que le flux d'air soit moins freiné lors du passage par la structure ne pourrait, du fait de son volume, être intégrée dans le circuit d'aération de véhicules automobiles existants et pourrait gêner l'efficacité de la climatisation du véhicule en été.

Une autre technologie consiste à réaliser un système de chauffage à base d'éléments céramiques CTP plans pris en sandwich entre deux lamelles électriquement conductrices, formant bornes d'alimentation de l'élément CTP. Chaque structure stratifiée ainsi formée étant destinée à être utilisée avec une tension de 110 ou 220 V, elle est encapsulée dans un isolant électrique pour des raisons de sécurité. L'échange de chaleur avec le milieu environnant est réalisé par l'intermédiaire d'une lamelle plan en contact avec l'encapsulage d'isolant, à laquelle est superposée une lamelle formant radiateur, c'est-à-dire apte à échanger la chaleur produite par l'élément céramique CTP avec le milieu environnant. La fabrication de telles structures est très complexe et coûteuse et l'efficacité de ces structures dans un système de chauffage pour véhicules automobiles est plutôt discutable. En effet, de telles structures présentent une certaine inertie et, du fait de la présence de l'isolant, la conduction thermique vers la lamelle échangeuse de chaleur n'est pas des meilleures, tandis qu'à l'inverse, le refroidissement de l'élément CTP plan est gêné, affectant le rendement de l'élément.

D'autres dispositifs de chauffage à base d'éléments céramique CTP plans, plus spécifiquement mis en oeuvre dans le domaine automobile, sont connus des documents EP-A2-0 738 098 et JP 62-107261. Ils comportent une électrode en contact avec l'élément CTP et un élément formant radiateur, qui comporte une lame de transfert de chaleur et des ailettes formant radiateur thermique disposées sur la lame de transfert de chaleur.

Dans le cas du document EP-A2-0 738 098, chaque lame de transfert est brasée à une ailette formant radiateur thermique. L'électrode est formée par une pâte métallique formant le revêtement de deux faces principales d'un substrat à coefficient de température positif et vient en contact avec la lame plane de transfert de chaleur par l'intermédiaire d'un film d'huile ou de graisse, cette dernière lame assurant également l'alimentation électrique de l'élément CTP. Plusieurs rangées parallèles de ces éléments CTP, prises en sandwich entre des éléments formant radiateur sont reçues dans un boîtier, luimême logé dans un bâti. Un ressort en U intercalé entre le boîtier et le bâti de support permet de maintenir l'ensemble des éléments en place.

Dans le cas du document JP-62-107261, la partie génératrice de chaleur et la partie formant radiateur thermique sont disposées dans un boîtier ayant une certaine élasticité, de manière à ce que la lame de transfert thermique soit en contact avec l'électrode.

La complexité de ces dispositifs les rend coûteux et longs à réaliser.

De plus, en raisons de leur structure particulière, ceux-ci manquent singulièrement de modularité.

La présente invention a pour but de pallier ces inconvénients.

Elle propose pour ce faire , un dispositif de chauffage comportant un boîtier à parois ajourées pour le passage d'air à travers le boîtier, dans lequel sont montés au moins un élément résistif plan, ayant un coefficient de température positif CTP, et au moins une lame adaptée à former radiateur thermique pour ledit au moins un élément résistif plan lorsque ledit au moins un élément résistif plan est alimenté en énergie électrique, ladite au moins une lame étant en contact de transfert thermique avec ledit au moins un élément résistif plan, caractérisé en ce que ladite au moins une lame est adaptée à former ressort de mise sous pression dudit au moins un élément résistif plan pour le maintenir en position dans le boîtier.

Grâce à ces dispositions, la présente invention pallie non seulement les inconvénients des dispositifs de chauffage existants, mais présente également des performances particulièrement intéressantes.

En effet, un tel dispositif est évidemment nettement moins cher à fabriquer que les dispositifs de l'état de la technique mettant en oeuvre les éléments CTP, mentionnés supra. En outre, on obtient un très bon échange thermique entre l'élément résistif CTP et la lame formant radiateur. Il en résulte notamment une moindre inertie, garantissant un chauffage quasi instantané, très appréciable dans le domaine automobile, surtout lorsqu'il s'agit d'élever plus rapidement la température de l'habitacle. De plus, outre la simplicité du dispositif, due notamment à la double fonction (radiateur et ressort de mise sous pression) conférée à la lame, l'élément CTP est également mieux refroidi et présente, en conséquence, un meilleur rendement.

La fonction de ressort de mise sous pression de la lame permet également de maintenir de manière particulièrement simple l'élément CTP plan en position au sein du boîtier. Cela s'avère particulièrement avantageux lorsque plusieurs rangées formées d'une pluralité d'éléments CTP plans alignés sont mises en oeuvre, auquel cas une lame donnée peut servir à maintenir en place plusieurs éléments CTP en équilibrant les pressions sur ces derniers. A cet égard, on notera qu'une telle fonction ne peut être assurée par les ailettes du document EP-A2-0 738 098, en raison de leur fixation aux lames planes correspondantes.

En outre, il est possible pour un même boîtier de modifier à souhait le nombre d'éléments CTP plans et/ou de lames ainsi que le type d'éléments CTP et/ou de lames utilisés, conférant une modularité très intéressante au dispositif de chauffage de la présente invention.

Mais surtout, l'homme du métier ne s'attendait pas à ce qu'un tel dispositif puisse permettre d'obtenir une chute de pression se situant, en pratique, en deçà des 80 Pa, qui était l'objectif avoué pour un flux d'air de 300 à 350 kg/h.

Avantageusement la lame est en outre adaptée à former conducteur électrique pour l'alimentation en énergie électrique de l'élément résistif plan.

Dans un mode de réalisation préféré, le dispositif comporte une pluralité de rangées parallèles d'éléments résistifs CTP plans, pris en sandwich entre des lames, dont chacune est adaptée à former radiateur thermique, ressort de mise sous pression et conducteur électrique, celles de ces demières lames disposées entre deux rangées adjacentes d'éléments résistifs, venant alternativement au contact des éléments résistifs de l'une et de l'autre de ces rangées adjacentes.

On obtient ainsi un dispositif de chauffage particulièrement simple, dans lequel deux lames prenant en sandwich une rangée formée d'un ou plusieurs éléments CTP, permettent de raccorder le ou les élément(s) CTP aux pôles opposés d'une source d'alimentation en énergie électrique ou source de courant. De plus, ces lames qui présentent des surfaces venant alternativement au contact des éléments CTP plans de l'une et de l'autre de deux rangées adjacentes, font office de ressort de mise sous pression et de radiateur thermique pour chacune de ces deux rangées adjacentes.

Pour éviter tout échauffement local, dans ce mode de réalisation préféré, les éléments résistifs sont chacun constitués d'un substrat en matériau céramique à coefficient de température positif, présentant, sur ses deux faces destinées à venir au contact des lames, un revêtement de métallisation.

Selon des caractéristiques préférées, éventuellement combinées :
- les éléments résistifs présentent chacun une température de Curie supérieure à 160°C, de préférence égale à environ 220°C ;
- le boîtier comporte des parois de connexion reliant les parois ajourées l'une à l'autre et des moyens d'assemblage amovible des parois ajourées et des parois de connexion les unes aux autres, les extrémités longitudinales des lames sont bloquées en position par lesdites parois de connexion et lesdites lames et lesdits éléments résistifs sont retenus latéralement par lesdites parois ajourées ;
- la ou les lame(s) forme(nt), en profil longitudinal, une succession continue de Ω tête-bêche ;
- une lame ondulée formant ressort et une lame plane en matériau électriquement isolant, sont intercalées entre une des parois de connexion du boîtier et une lame d'extrémité ;
- une languette formant borne d'alimentation est fixée à l'une des extrémités longitudinales de chacune des lames et fait saillie du boîtier ;
- l'une des deux lames prenant en sandwich une rangée d'un ou plusieurs éléments résistifs est raccordée à sa languette d'alimentation par l'intermédiaire d'un fusible ;
- les parois de connexion sont au moins en partie réalisées monobloc avec l'une des parois ajourées ;
- la ou les lame(s) adaptée(s) à former radiateur thermique est (sont) réalisée(s) en alliage d'aluminium.

En variante, le dispositif de chauffage comporte au moins deux rangées parallèles d'éléments résistifs CTP plans, prenant en sandwich un conducteur électrique pour l'alimentation en énergie électrique des deux rangées d'éléments résistifs CTP plans et au moins deux lames, dont chacune est adaptée à former radiateur thermique, ressort de mise sous pression et conducteur électrique, prenant en sandwich lesdites au moins deux rangées d'éléments résistifs CTP plans.

Le conducteur électrique pris en sandwich entre les deux rangées d'éléments CTP pourra ainsi être simplement constitué d'une lame plane ou d'un fil en un matériau électriquement conducteur raccordé à une borne d'une source, les deux lames étant raccordées à l'autre borne de la source.

Les caractéristiques préférées et avantageuses définies ci-dessus pourront bien sûr être transposées à cette variante.

Dans un autre mode de réalisation, le dispositif de chauffage comporte au moins deux rangées parallèles d'éléments CTP plans prises chacune en sandwich entre deux lames dont chacune est adaptée à former radiateur thermique, ressort de mise sous pression et conducteur électrique et un film électriquement isolant, par exemple en Mylar ou en Kapton, disposé entre deux lames adjacentes, de manière à permettre une alimentation individuelle de chacune des rangées d'éléments CTP plans.

Il est ainsi possible d'alimenter par paliers le dispositif de chauffage, ce qui s'avère très utile en particulier pour éviter les pics de courant dus à la montée en température des éléments CTP, à la mise sous tension. Cela permet également, par exemple dans un véhicule automobile, de couper l'alimentation de certaines des rangées d'éléments CTP plans lorsque la source d'alimentation en énergie électrique doit être utilisée pour d'autres besoins (organes de sécurité ...).

Dans un autre mode de réalisation, une telle alimentation par paliers pourrait également être réalisée, en prévoyant un système de chauffage incorporant un dispositif de chauffage tel que défini ci-dessus dans le mode de réalisation préféré ou dans une variante et au moins une source d'alimentation en énergie électrique et en raccordant la ou les source(s) d'une manière prédéterminée au dispositif de chauffage et/ou en mettant en oeuvre un circuit de commutation sur les moyens de liaison entre la ou les source(s) et le dispositif.

Enfin, la présente invention a également trait à l'utilisation d'un dispositif de chauffage tel que défini ci-dessus dans le circuit d'aération d'un véhicule automobile.

L'invention sera mieux comprise à la lecture de la description détaillée suivante d'un mode de réalisation préféré, fait à l'appui des dessins sur lesquels :
- la figure 1 est une vue schématique en perspective, avec arrachements partiels d'un dispositif de chauffage conforme à l'invention,
- la figure 2 représente un circuit électrique dans lequel est placé le dispositif de la figure 1, et
- la figure 3 en une vue très schématique d'un circuit d'aération d'un véhicule automobile dans lequel est placé le dispositif de la figure 1.

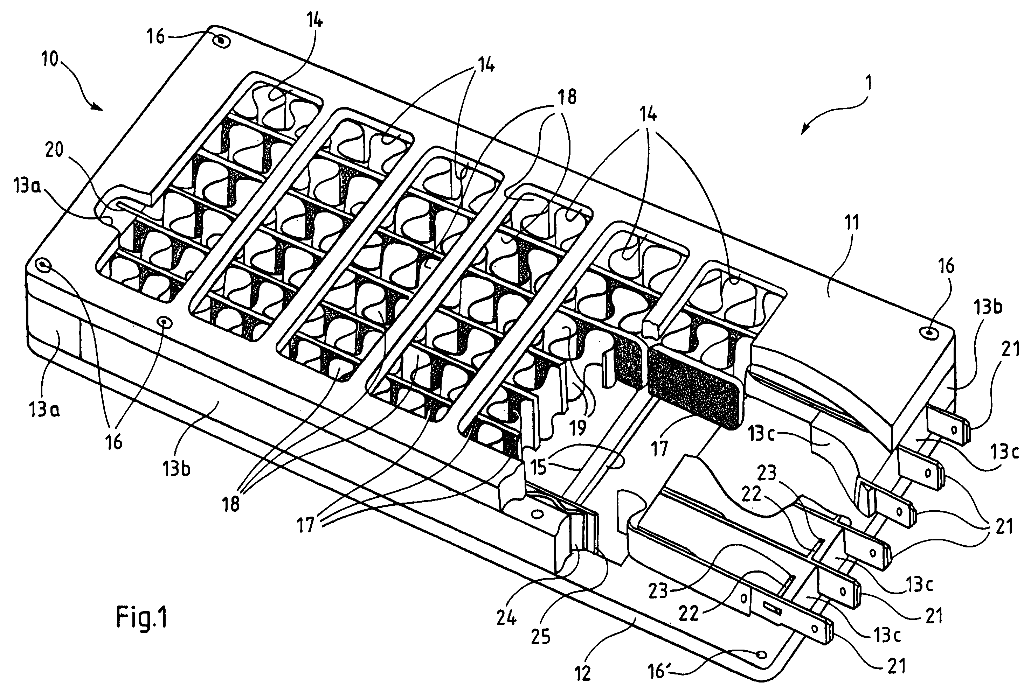

Le dispositif de chauffage 1 représenté sur les figures 1 à 3 comporte un boîtier 10 constitué de deux parois avant 11 et arrière 12 rectangulaires et largement ajourées, ainsi que de parois de connexion 13a, 13b, 13c formant la jonction entre les parois avant 11 et arrière 12, pour des dimensions de 260 mm x 105 mm x 20 mm.

Les parois avant 11 et arrière 12 sont, ici, identiques l'une à l'autre et pourvues d'ouvertures rectangulaires, repérées respectivement 14 et 15 et coïncidant deux à deux, de manière à former des passages d'air à travers le boîtier 10. Les parois de connexion 13a, 13b et 13c sont formées de manière à ne pas empiéter sur ces ouvertures 14, 15 et pourraient, dans d'autres modes de réalisation, être formées monobloc, pour une partie ou la totalité d'entre elles, avec la paroi avant 11 ou la paroi arrière 12.

Les parois avant 11, arrière 12 et de connexion 13a, 13b, 13c sont réalisées dans un matériau isolant (thermique et électrique) et résistant à la température d'utilisation du dispositif de chauffage (environ 200°C en pratique), en l'espère du polypropylène. Elles sont assemblées les unes aux autres à l'aide d'ensembles boulon-écrou 16, passant dans des trous correspondants, pratiqués dans ces parois, et dont un seul, repéré 16', est visible sur la figure 1.

Une pluralité d'éléments résistifs plans à coefficient de température positif (CTP) 17 sont disposés dans le boîtier 10, entre les parois avant 11 et arrière 12, pris en sandwich entre des lames ou lamelles 18, formant notamment élément de connexion ou conducteur d'alimentation électrique et radiateur thermique pour ces éléments résistifs CTP 17.

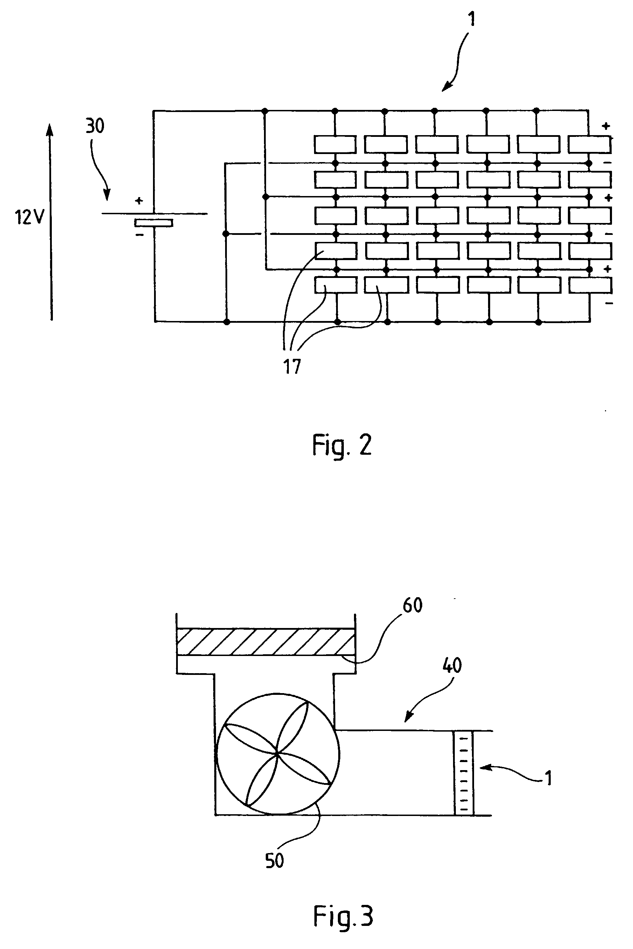

Pour des raisons de clarté, seuls quelques uns des éléments CTP 17 ont été repérés sur les figures 1 et 2. En pratique, ils sont au nombre de trente (cinq rangées parallèles de six éléments CTP), pris en sandwich entre six lames 18.

Ces éléments CTP sont ici des céramiques (dimensions : 34 mm x 10 mm x 1,5 mm) comportant un substrat à base de titanate de baryum dopé, revêtu sur ses faces opposées, venant au contact des lames 18, d'un revêtement d'aluminium, destiné à uniformiser la connexion électrique et éviter les couples électrochimiques entre l'élément CTP et la ou les lame(s) correspondante(s) 18. En d'autres termes, ces revêtements évitent la formation de zones d'échauffement local à l'emplacement des contacts entre la ou les lame(s) 18 et l'élément CTP 17.

De tels éléments CTP 17 présentent, dans le cas présent, chacun une température de Curie de 220°C et une résistance d'environ 0,2 Ω.

Les tranches des éléments CTP 17 viennent, quant à elles, au contact des parois avant 11 et arrière 12, à l'emplacement de parties de ces dernières délimitant les ouvertures 14. A cet égard, on observera que les parois 11 et 12 débordent légèrement des parois de connexion 13 a, 13b et 13c afin de retenir latéralement les éléments CTP 17 d'extrémité de rangée.

Les lames 18 sont réalisées dans un matériau thermiquement conducteur et électriquement conducteur, en l'espèce un alliage d'aluminium et forment, chacune, une succession rectiligne et continue de formes en Ω tête-bêche. La partie sensiblement plane de chacune des formes en Ω 19 vient au contact physique direct d'une face revêtue d'aluminium d'un élément CTP 17 disposé dans une rangée adjacente. Comme on peut le voir sur la figure 1, les lames 18 centrales viennent alternativement au contact, par l'intermédiaire de leurs formes en Ω, de deux rangées parallèles adjacentes d'éléments CTP 17, tandis que les deux lames 18 d'extrémité viennent uniquement au contact avec une seule rangée adjacente d'éléments CTP 17, par l'intermédiaire d'une forme en Ω 19 sur deux. Grâce aux dispositions des différents éléments du dispositif de chauffage 1, le boîtier n'est pas affecté par l'échauffement des lames 18 et éléments CTP 17.

Par ailleurs, l'utilisation d'un matériau ductile tel que l'aluminium permet d'obtenir un très bon contact entre les lames 18 et les éléments CTP 17 et, par voie de conséquence, un très bon rendement, tout en permettant aux lames 18 de remplir leur fonction de ressort de mise sous pression, comme cela sera décrit ci-après.

Les lames 18 sont retenues par l'une de leurs extrémités longitudinales dans des encoches pratiquées dans la paroi de connexion 13a (l'arrachement partiel de la figure 1, pratiqué dans la paroi avant 11, permet de voir l'une de ces encoches portant le repère 20). Les autres extrémités longitudinales sont prises en sandwich entre des éléments de paroi de connexion 13c ou un élément de paroi de connexion 13c et une paroi de connexion 13b. Par ailleurs, chacune de ces extrémités longitudinales opposées est prolongée par une languette 21, soudée à ces lames 18 et ayant la forme d'une borne d'alimentation électrique pour la lame 18 correspondante. Chacune des languettes 21 présente également un prolongement de blocage 22 de la languette 21 dans le boîtier 10, qui a été découpé dans la languette 21 et qui en fait saillie perpendiculairement. Pour assurer le blocage, ces prolongements 22 sont reçus dans des entailles correspondantes 23 des éléments de paroi de connexion 13c.

On observera encore que les éléments de paroi de connexion 13c sont légèrement chanfreinés à leurs extrémités, pour recevoir les lames 18 avec un léger jeu. Par ailleurs, si nécessaire, on pourra, dans d'autres modes de réalisation, placer les extrémités longitudinales des lames 18 dans des inserts en matériau plastique hautement résistant à une température très élevée, afin de mieux encore protéger le boîtier 20. Cela peut s'avérer très utile lorsque par exemple un ventilateur de circuit d'aération de véhicule automobile, dans lequel est placé le dispositif 1, tombe en panne et n'assure plus le refroidissement du dispositif 1.

Les lames 18 sont ainsi retenues longitudinalement par les parois de connexion et latéralement par les parois avant 11 et arrière 12. A cet égard, on notera que les lames 18 s'étendent sensiblement sur toute la longueur du boîtier 10, tandis que les éléments CTP présentent une longueur légèrement supérieure à la largeur d'une ouverture 14, de manière à pouvoir entrer en contact avec les parties de parois avant 11 et arrière 12 délimitant l'ouverture correspondante 14, afin de pouvoir être maintenus entre ces parois 11, 12.

Grâce à leur forme, les lames 18 font également office de ressorts maintenant sous pression les éléments CTP 17, assurant ainsi leur maintien en position au sein du boîtier 10 et, en particulier, leur tenue aux vibrations.

Cette mise sous pression des éléments CTP 17 par les lames 18 est, dans le présent mode de réalisation préféré, avantageusement complétée par une lame ondulée formant ressort de pression 24, prenant appui sur la paroi longitudinale de connexion 13b d'une part, et sur une lamelle intermédiaire plate 25, en un matériau isolant, venant au contact de l'une des lames d'extrémité 18, d'autre part. Il est ainsi possible de rattraper des tolérances de fabrication des divers éléments constitutifs du dispositif de chauffage 1, par un moyen très peu onéreux.

On notera encore que le ressort de pression 24 et la lamelle intermédiaire 25 s'étendent sensiblement sur la longueur de la partie ajourée du boîtier 10.

Comme montré sur la figure 2, les parties de languette 21 faisant saillie du boîtier 10 sont destinées à être raccordées aux pôles d'une source d'alimentation en énergie électrique 30, telle que la batterie 12 V d'un véhicule automobile. Ainsi, en raccordant une languette 21 sur deux et, par conséquent, une lame 18 sur deux, à l'un des pôles de la batterie et le restant des languettes 21 à l'autre pôle de la batterie, chaque élément CTP sera pris en sandwich entre deux lames formant conducteur électrique et de pôles opposés. Deux lames 18 prenant en sandwich une rangée d'éléments CTP 17 et raccordées à une source d'alimentation, forment ainsi un circuit fermé, les éléments CTP 17 faisant office d'éléments résistifs chauffants et les deux lames 18 les prenant en sandwich faisant office de connexions ou de conducteurs électriques, raccordées, d'une part, aux bornes de la source d'alimentation en énergie électrique et, d'autre part, aux bornes des éléments CTP constituées, ici, par les revêtements en aluminium. En outre, ces lames 18, grâce à leur forme, font office de radiateur ou dissipateur thermique pour la ou les rangée(s) d'éléments CTP 17 adjacents, afin d'évacuer dans les passages d'air formés par les ouvertures 14, 15 la chaleur générée par les éléments CTP 17. De plus, comme déjà mentionné supra, les lames 18 font également ici office de ressort de pression maintenant en place les éléments CTP 17.

Le montage de ce dispositif de chauffage 1 dans le circuit d'aération d'un véhicule automobile et le raccordement à une source d'alimentation électrique, telle que la batterie de ce véhicule, étant à la portée de l'homme du métier, ceux-ci ne seront pas décrits plus avant ici.

En référence à la figure 3, on observera simplement que, dans le cas du montage du dispositif de chauffage 1 dans le circuit d'aération 40 d'un véhicule automobile, le dispositif de chauffage est disposé en aval d'un ventilateur 50, lui-même placé en aval de filtres 60 (pour pollens ...) en communication avec une prise d'air. Le dispositif de chauffage 1 est quant à lui en communication avec un boîtier de répartition d'air dans l'habitacle du véhicule automobile.

Grâce à ces dispositions, il est réalisé un dispositif de chauffage 1 particulièrement simple (en particulier, grâce notamment à la triple fonction de conducteur électrique, de radiateur thermique et de ressort de mise sous pression assurée par chacune des lames 18, et cela pour une pluralité d'éléments CTP 17), donc moins onéreux que les dispositifs de chauffage connus de l'état de la technique. Ce dispositif de chauffage 1 s'avère également particulièrement efficace en termes de chauffage. En pratique, les éléments CTP 17 régulent la température de chauffage à environ 215° pour une puissance en régime établi de l'ordre de 1000 W. En outre, la courbe de perte de charge en fonction du flux d'air présente des caractéristiques particulièrement intéressantes, allant au-delà de ce que l'homme du métier pensait pouvoir obtenir. En effet, la perte de charge est d'environ 40 Pa pour un flux d'air de 350 kg/h, d'environ 60 Pa pour un flux d'air de 450 kg/h et d'environ 80 Pa pour un flux d'air de 500 kg/h.

Par ailleurs, du fait que les éléments montés dans le boîtier ne sont pas fixés entre eux, mais uniquement maintenus sous pression dans ce boîtier, par les lames 18 et accessoirement par le ressort de pression 24, le dispositif de chauffage 1, conforme au mode de réalisation préféré de la présente invention, présente également une modularité particulièrement intéressante. En effet, il est possible de monter dans le boîtier 10, des lames 18 et des éléments CTP 17 de formes et caractéristiques variées, en nombre variable, ce qui permet d'adapter aisément le dispositif de chauffage 1 à une application donnée, notamment en ce qui concerne la puissance requise (cette dernière étant fonction du nombre d'éléments CTP et de la forme des lames qui influent sur l'importance de l'échange de chaleur avec le flux d'air circulant dans les passages d'air, en fonctionnement).

A cet égard, on notera que, dans d'autres modes de réalisation, les lames 18 peuvent être réalisées dans un autre matériau, tel que le laiton, le cuivre, un alliage de cuivre et de béryllium, un alliage de cuivre et de nickel, etc., et présenter des formes diverses et variées, pour autant que cette forme fasse office de radiateur, c'est-à-dire de dispositif augmentant la surface de rayonnement des éléments CTP 17 et de ressort de mise sous pression. En particulier, les formes en Ω des lames 18 de la figure 1 pourront être remplacées par des formes à trois côtés, telles que des demi-carrés, des demi-rectangles, des demi-trapèzes.

On pourra également réaliser des doubles lames à partir de deux lames présentant des formes du type de celles mentionnées ci-dessus et soudées l'une à l'autre, de manière à former, par exemple, en profil, une succession de trapèzes reliés les uns autres par des bases de demi-trapèzes soudées les unes aux autres.

Par ailleurs, les lames 18 peuvent également être constituées par de simples parallélépipèdes en mousse d'aluminium du type AL 003825 commercialisée par la société britannique Goodfellow. La constitution chimique de cette mousse est Al 98 / Mg 0,6 / Si 0,5 et ses caractéristiques sont les suivantes :
- conductivité thermique : 8,65 W/m.K
- densité de masse : 0,2 g/cm³
- porosité : 93 %
- chute de pression 9 Pa/mm de mousse
- taille des pores 16 pores /cm
(les alvéoles ont un diamètre approximatif de 0,625 mm)

On pourra également prévoir que les éléments CTP 17 disposés dans une rangée, le soit avec un certain écartement, au lieu d'être disposés bout à bout, tel que représenté sur la figure 1. Les lames 18 pourront bien sûr être adaptées à ne venir qu'une seule fois au contact d'un élément CTP 17 donné, sur la longueur d'une face de celui-ci.

Au lieu d'être raccordées à des languettes 21 formant bornes d'alimentation, les extrémités des lames 18 peuvent elles-mêmes être conformées en bomes d'alimentation et présenter une autre forme qu'une simple languette, telle que par exemple la forme d'une cosse. Les lames 18 peuvent également être raccordées à la languette 21 par l'intermédiaire d'un fusible d'intensité ou thermique assurant la protection du dispositif de chauffage 1, par exemple dans le cas où le ventilateur d'un circuit d'aération d'un véhicule automobile viendrait à tomber en panne. Trois fusibles suffiraient ainsi dans le cadre du mode de réalisation décrit à l'appui de la figure 1.

Des grilles destinées à protéger l'intérieur du boîtier 10 pourront également être montées sur les parois avant 11 et arrière 12.

Dans un autre mode de réalisation, les éléments CTP pourront être protégés par la mise en oeuvre de montants ou entretoises disposés en regard des tranches des éléments CTP et faisant partie intégrante des parois ajourées. En d'autres termes, ces entretoises seront disposées perpendiculairement aux montants définissant les ouvertures 14 de la figure 1 et s'étendant dans le sens de la largeur des parois ajourées.

Avantageusement, dans ce demier mode de réalisation, on mettra en oeuvre au moins deux rangées parallèles d'éléments résistifs CTP plans prises chacune en sandwich entre deux lames, dont chacune est adaptée à former radiateur thermique, ressort de mise sous pression et conducteur électrique, un film électriquement isolant étant disposé entre deux lames adjacentes, ces deux lames adjacentes situées entre les entretoises de protection précitées étant destinées à être raccordées à la même borne d'une source d'alimentation ou à des bornes de même polarité de sources d'alimentation différentes.

On évite ainsi de manière efficace les court-circuits.

Les lames 18 et éléments CTP 17, au lieu d'être disposés dans le sens de la longueur du boîtier, pourront bien sûr en variante être disposés dans le sens de la largeur de ce même boîtier 10.

Les éléments CTP 17 en céramique à base de titanate de baryum pourront être remplacés par des céramiques à base de solution solide de baryum et de titanate de strontium.

Le revêtement de métallisation pourra, si nécessaire, être complété par un film protecteur contre les agressions du milieu environnant.

Pour atténuer d'éventuelles frictions qui pourront avoir lieu entre les lames 18 et les éléments CTP 17, on pourra intercaler entre ceux-ci une lame intermédiaire en un matériau thermiquement conducteur et électriquement conducteur.

La constitution et le nombre des éléments CTP seront bien sûr choisis en fonction des caractéristiques recherchées pour le dispositif de chauffage (puissance, température de chauffage ...). En lieu et place d'une pluralité d'éléments CTP alignés dans une même rangée, on pourra d'ailleurs ne prévoir qu'une bande continue d'un élément CTP.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Dispositif de chauffage comportant un boîtier (10) à parois ajourées (11, 12) pour le passage d'air à travers le boîtier, dans lequel sont montés au moins un élément résistif plan (17), ayant un coefficient de température positif CTP, et au moins une lame (18) adaptée à former radiateur thermique pour ledit au moins un élément résistif plan lorsque ledit au moins un élément résistif plan est alimenté en énergie électrique, ladite au moins une lame étant en contact de transfert thermique avec ledit au moins un élément résistif plan, caractérisé en ce que ladite au moins une lame est adaptée à former ressort de mise sous pression dudit au moins un élément résistif plan pour le maintenir en position dans le boîtier.

2. Dispositif selon la revendication 1, caractérisé en ce que ladite au moins une lame est en outre adaptée à former conducteur électrique pour l'alimentation en énergie électrique dudit au moins un élément résistif plan.

3. Dispositif selon la revendication 2, caractérisé en ce qu'il comporte une pluralité de rangées parallèles d'éléments résistifs CTP plans, pris en sandwich entre des lames, dont chacune est adaptée à former radiateur thermique, ressort de mise sous pression et conducteur électrique, celles de ces dernières lames disposées entre deux rangées adjacentes d'éléments résistifs, venant alternativement au contact des éléments résistifs de l'une et de l'autre de ces rangées adjacentes.

4. Dispositif de chauffage selon la revendication 2, caractérisé en ce qu'il comporte au moins deux rangées parallèles d'éléments résistifs CTP plans, prenant en sandwich un conducteur électrique pour l'alimentation en énergie électrique des deux rangées d'éléments résistifs CTP plans et au moins deux lames, dont chacune est adaptée à former radiateur thermique, ressort de mise sous pression et conducteur électrique, prenant en sandwich lesdites au moins deux rangées d'éléments résistifs CTP plans.

5. Dispositif selon la revendication 2, caractérisé en ce qu'il comporte au moins deux rangées parallèles d'éléments résistifs CTP plans prises chacune en sandwich entre deux lames, dont chacune est adaptée à former radiateur thermique, ressort de mise sous pression et conducteur électrique, et un film électriquement isolant, disposé entre deux lames adjacentes, de manière à permettre une alimentation individuelle de chacune des rangées d'éléments résistifs CTP plans.

6. Dispositif selon l'une des revendications 3 à 5, caractérisé en ce que les éléments résistifs sont chacun constitués d'un substrat en matériau céramique à coefficient de température positif, présentant, sur ses deux faces destinées à venir au contact des lames ou du conducteur électrique, un revêtement de métallisation.

7. Dispositif selon la revendication 6, caractérisé en ce que les éléments résistifs présentent chacun une température de Curie supérieure à 160°C, de préférence égale à environ 220°C.

8. Dispositif selon l'une quelconque des revendications 3 à 7, caractérisé en ce que le boîtier comporte des parois de connexion (13a, 13b, 13c) reliant les parois ajourées l'une à l'autre et des moyens d'assemblage (16) amovible des parois ajourées et des parois de connexion les unes aux autres, en ce que les extrémités longitudinales des lames sont bloquées en position par lesdites parois de connexion et en ce que lesdites lames et lesdits éléments résistifs sont retenus latéralement par lesdites parois ajourées.

9. Dispositif selon l'une quelconque des revendications 3 à 8, caractérisé en ce qu'une languette (21) formant bome d'alimentation est fixée à l'une des extrémités longitudinales de chacune des lames et fait saillie du boîtier.

10. Dispositif selon la revendication 9, caractérisé en ce que l'une des deux lames prenant en sandwich une rangée d'un ou plusieurs éléments résistifs est raccordée à sa languette d'alimentation par l'intermédiaire d'un fusible.

11. Dispositif selon l'une quelconque des revendications 8 à 10, caractérisé en ce que les parois de connexion sont au moins en partie réalisées monobloc avec l'une des parois ajourées.

12. Dispositif selon l'une quelconque des revendications 3 à 11, caractérisé en ce que les parois ajourées sont pourvues d'entretoises de protection des éléments résistifs CTP plans.

13. Dispositif selon l'une quelconque des revendications 1 à 12, caractérisé en ce que la ou les lame(s) adaptée(s) à former radiateur thermique est (sont) réalisée(s) en alliage d'aluminium ou en mousse d'aluminium.

14. Dispositif selon l'une quelconque des revendications 1 à 13, caractérisé en ce que la ou les lame(s) forme(nt), en profil longitudinal, une succession continue de Ω (19) tête-bêche.

15. Dispositif selon la revendication 14, caractérisé en ce qu'une lame ondulée formant ressort (24) et une lame plane (25) en matériau électriquement isolant, sont intercalées entre une des parois de connexion du boîtier et une lame d'extrémité.

16. Système de chauffage incorporant un dispositif de chauffage suivant l'une quelconque des revendications précédentes, au moins une source d'alimentation électrique, et des moyens de liaison électrique entre ladite au moins une source d'alimentation et le dispositif de chauffage.

17. Système de chauffage selon la revendication 16, caractérisé en ce qu'il comporte en outre un circuit de commutation branché sur les moyens de liaison entre ladite au moins une source et le dispositif de chauffage.

18. Utilisation d'un dispositif ou d'un système de chauffage selon l'une quelconque des revendications précédentes dans le circuit d'aération d'un véhicule automobile.
